# EUROPEAN PATENT SPECIFICATION

(11) **EP 1 894 765 B1**
(45) Date of publication and mention of the grant of the patent: **20.07.2011**
(21) Application number: 07114090.9
(22) Date of filing: 09.08.2007
(51) Int. Cl.: B60K 17/10, F16H 61/42, F16H 61/44, F16H 61/40

(54) **Hydraulic traveling drive system**
Hydraulisches Antriebssystem
Commande d'un système de traction hydrostatique

(30) Priority: 30.08.2006 JP 2006234056
(43) Date of publication of application: 05.03.2008
(73) Proprietor: Kobelco Cranes Co., Ltd., Shinagawa-ku, Tokyo, Tokyo 651-2271 (JP)
(72) Inventor: Tsunoo, Taisuke, Okubo-cho Akashi-shi Hyogo 674-0063 (JP); Kobayashi, Takahiro, Okubo-cho Akashi-shi Hyogo 674-0063 (JP); Terasaka Joji, Okubo-cho Akashi-shi Hyogo 674-0063 (JP); Hori, Naoto, 5-5, Takatsukadai, 1-chome Nishi-ku Kobe-shi Hyogo 651-2271 (JP); Sugano, Naoki, 5-5 Takatsukadai 1-chome, Nishi-ku Kobe-shi Hyogo 651-2271 (JP)
(74) Representative: TBK

(56) References cited:
- EP-A- 1 079 153
- EP-A- 1 431 627
- WO-A-2005/111476
- US-A- 3 416 452
- US-B1- 6 276 134

## Description

### BACKGROUND OF THE INVENTION

### 1. Field of the Invention

The present invention relates to a hydraulic traveling drive system which has a hydrostatic transmission (HST).

### 2. Description of the Related Art

Generally, hydraulic traveling drive systems used in hydraulic traveling drive vehicles include a closed circuit which has a variable displacement pump, a variable displacement motor, and a main circuit. When an accelerator pedal is returned, a capacity of the pump is reduced to generate a braking pressure in the main circuit of a motor outlet side. Then, the braking pressure is torque-converted by the pump and the torque is absorbed by a prime mover. Thus, the deceleration effect can be obtained. With respect to systems of such type, the following configurations are described as examples.

A hydraulic traveling drive system described in Japanese Unexamined Patent Application Publication No. 2004-332753 uses a variable displacement motor to obtain an auxiliary braking function. More specifically, in an HST vehicle (hydraulic traveling drive vehicle) which has an electric capacity control motor whose capacity is controlled by an electric instruction, when the vehicle is traveling in a state that a selection switch (auxiliary braking switch) of an auxiliary drive system is being operated, if a degree of decrease in an accelerator pedal operation amount exceeds a set value, by an external instruction, a motor regulator is operated and the capacity of the electric capacity control motor is increased. Thus, a braking pressure is generated in a main line of an outlet side of the electric capacity control motor. Then, in addition to an original braking pressure generated in response to the decrease of the capacity of the variable displacement pump, the high braking force is generated. Thus, the HST vehicle is decelerated at the deceleration grater than that in a normal traveling.

Japanese Unexamined Patent Application Publication No. 6-265013 discusses a technique for preventing overspeed of a variable displacement motor at inertial travel time. More specifically, an HST hydraulic travel driving system includes a variable capacity pump which is driven by a prime mover, the motor which is connected in a closed circuit to the variable capacity pump by a pair of main circuits and which is driven by discharged oil from the pump, and a bypass line which connects the pair of main circuits. The HST hydraulic traveling drive system further includes a flow rate adjusting valve to restrict a maximum flow rate of the bypass line to be equal to or less than a discharge amount of the motor rotating at a maximum allowable rotating speed.

Japanese Unexamined Patent Application Publication No. 2003-130176 discusses a traveling mechanism for emergency for temporarily driving a traveling vehicle in emergency, when an HST, a control device, or the HST and the control device break down. More specifically, in a traveling vehicle, a hydraulic-mechanical transmission which is controlled by an electric circuit in which an HST, a planetary gear mechanism, a forward-backward switching mechanism, and a control device are connected with each other, is installed. In the electric circuit, a circuit for emergency which does not pass through the control device is provided. When any of the HST, the control device, or the HST and the control device break down, the angle of a movable swash plate of a hydraulic pump in the HST is set to zero. Further, the engine is rotated to travel in a state that rotation of a sun gear in the planetary gear mechanism is fixed.

Japanese Unexamined Patent Application Publication No. 2000-170908 discusses a control mechanism of an HST vehicle which permits creeping driving depending on contents of a failure. More specifically, when a failure is detected in a component of the HST, a controller stops running of an engine and stores contents of the failure. Then, when the engine is restarted, based on the stored contents of the failure, the controller determines whether to prohibit the vehicle to travel or to permit the vehicle to travel.

In the Japanese Unexamined Patent Application Publication No. 2004-332753, the travel characteristic of the hydraulic traveling drive vehicle is changed according to the situation by performing the capacity control of the electric capacity control motor by the electric instruction. However, in view of safety, the following problems can be considered.
(1) In a configuration in which a variable displacement motor is configured to have a small capacity in a state that any control is not performed, for example, at a time before an engine is started, if a wiring or the like in a control system is broken, an adequate driving force cannot be obtained. Then, the vehicle cannot travel, and if emergency evacuation is necessary, it is not possible to respond to the emergency.
(2) Further, in a state that any control is not performed similarly to the above, if the variable displacement motor is configured to have a large capacity, for example, in a case that the vehicle is traveling at a maximum speed, the capacity of the variable displacement motor is to be a minimum capacity. In such a case, if the wiring or the like in the control system is broken, the capacity of the variable displacement motor is rapidly changed from the minimum capacity to the maximum capacity and then, the speed is rapidly decreased.

In the Japanese Unexamined Patent Application Publication No. 6-265013, the only difference between the above technique and the technique is that in order to prevent the overspeed of the variable displacement motor at the time of the inertial travel time, the flow rate adjusting valve for restricting the maximum flow rate of the bypass line to be equal to or less than the discharge amount of the variable displacement motor rotating at the maximum allowable rotating speed is provided. Accordingly, also in Japanese Unexamined Patent Application Publication No. 6-265013, similar problems to those in the Japanese Unexamined Patent Application Publication No. 2004-332753 exist.

According to Japanese Unexamined Patent Application Publication No. 2003-130176, in addition to the HST, a mechanical device is required and the configuration of the working vehicle is complicated. Thus, this is disadvantageous in an aspect of production costs. Further, if a failure occurs in a high-speed travel, the reduction ratio is rapidly increased and the vehicle is rapidly decelerated. This may cause problems.

According to Japanese Unexamined Patent Application Publication No. 2000-170908, if a failure occurs, the vehicle stops at a rapid deceleration or the vehicle may transfer to a creeping traveling. This may cause problems.

Furthermore, US 6,276,134 B1 discloses a hydraulic traveling drive system having the features of the preamble of claim 1.

### SUMMARY OF THE INVENTION

Accordingly, it is an object of the present invention to provide, without providing a mechanical device in addition to an HST, a hydraulic traveling drive system capable of ensuring power necessary for emergency evacuation and capable of preventing a rapid deceleration at high-speed traveling even if an electric control does not work due to breaking of wire or the like.

According to the present invention, the above object is solved with a hydraulic traveling drive system having the features of independent claims 1 or 4.

In the hydraulic traveling drive system according to claim 1, if the control current sent from the controller is shut off due to a trouble such as breaking of wire and the capacity control electromagnetic proportional valve is not controlled, the motor capacity of the electric capacity control motor becomes the minimum value. Accordingly, it is not possible to obtain an adequate driving force.

However, the pressure capacity control motor which has the pressure capacity control valve is controlled to have the motor capacity corresponding to the pressure of the main circuit. Accordingly, as the pressure of the main circuit is increased, the motor capacity of the pressure capacity control motor is also increased. Thus, an advantage can be obtained that evacuation in emergency in a hydraulic traveling drive vehicle which travels using the hydraulic traveling drive system is possible.

On the other hand, in a high-speed traveling, if the control current sent from the controller is shut off due to the trouble such as breaking of wire, the pressure of the drive side main circuit becomes a low pressure and the motor capacity of the pressure capacity control motor is maintained to be a small capacity. Accordingly, the braking force is not increased. Further, the motor capacity of the electric capacity control motor becomes the minimum capacity and the braking force of the electric capacity control motor becomes a small force. Accordingly, the total braking force is not rapidly increased. For example, rapid deceleration of the hydraulic traveling drive vehicle which travels using the hydraulic traveling drive system is reduced as a whole. Accordingly, risks due to the rapid deceleration of the hydraulic traveling drive vehicle in the high-speed traveling can be prevented and safety can be improved.

Further, in addition to the above-described advantage of the hydraulic traveling drive system, in the hydraulic traveling drive system according to claim 2, if a pressure of a travel drive side (a pressure of an inflow side of operation oil of the pressure capacity control motor) between pressures of the operation oil flowing in the pair of the main circuits is selected by the pressure selection valve, the motor capacity of the pressure capacity control motor is controlled according to the pressure of the travel drive side, and even if a pressure of a braking side is increased, if the pressure of the travel drive side is not largely changed, the deceleration is slowly changed.

On the other hand, if the pressure of the brake side (the pressure of an outflow side of the operation oil of the pressure capacity control motor) is selected by the pressure selection valve, the motor capacity of the pressure capacity control motor is increased corresponding to the brake side pressure and the braking force is increased. Accordingly, it is possible to obtain the function of the auxiliary brake used on the long downhill slope or the like. Further, if the motor capacity of the electric capacity control motor is increased by the controller, various braking force controls can be performed.

Further, in addition to the above-described advantage of the hydraulic traveling drive system , in the hydraulic traveling drive system according to claim 3, a braking force of the axle of each one axis can be increased if the brake side pressure is selected by the pressure selection valve. Accordingly, if the hydraulic traveling drive vehicle has two axes, the braking force of the axle of the one axis and the braking force of the axle of the two axes can be independently varied. Thus, the auxiliary braking force can be varied in stages corresponding to the degree of the inclination of the long downhill slope or the like.

Further, in the hydraulic traveling drive system according to claim 4, if the control current sent from the controller is shut off, the motor capacity of the first electric capacity control motor becomes the minimum value. Then, it is not possible to obtain an adequate driving force. However, the motor capacity of the second electric capacity control motor is controlled to be the maximum value. Accordingly, it is possible to obtain an advantage that evacuation in emergency in the hydraulic traveling drive vehicle which travels using the hydraulic traveling drive system is possible.

On the other hand, in a high-speed traveling, if the control current sent from the controller is shut off due to some reason, the motor capacity of the second electric capacity control motor becomes a large capacity and the braking force is increased.

However, the motor capacity of the first electric capacity control motor becomes the minimum capacity and the braking force is decreased. Accordingly, the increase in the braking force as a whole is limited. Then, for example, as a whole, it is prevented that the hydraulic traveling drive vehicle which travels using the hydraulic traveling drive system is rapidly decelerated. Accordingly, it is possible to obtain an advantage of improved safety that the degree of the risk due to the rapid deceleration of the hydraulic traveling drive vehicle at the high-speed traveling is reduced.

Further, in addition to above-described advantage of the hydraulic traveling drive system , in the hydraulic traveling drive system according to claim 5, using the controller, one of or both of the capacity control electromagnetic proportional valve of the first electric capacity control motor and the capacity control electromagnetic proportional valve of the second electric capacity control motor can be controlled to increase the motor capacity to a large capacity. Accordingly, the auxiliary braking force can be obtained in stages corresponding to the inclination of the downhill slope, and it is possible to safely travel on the long slope.

Further, in the hydraulic traveling drive system of the hydraulic traveling drive system according to claim 6 , the axle of the one axis is driven by the first electric capacity control motor and the second electric capacity control motor. Accordingly, in addition to the above-described advantage of the hydraulic traveling drive system of the hydraulic traveling drive system according to the second aspect of the present invention, the auxiliary braking force can be adjusted more precisely corresponding to the inclination of the long downhill slope.

### BRIEF DESCRIPTION OF THE DRAWINGS

Fig. 1 is a view illustrating a schematic configuration of a hydraulic traveling drive system according to a first embodiment of the present invention.
Fig. 2 is a view illustrating a pump in the hydraulic traveling drive system according to the first embodiment of the present invention.
Fig. 3 is a view illustrating an electric capacity control motor in the hydraulic traveling drive system according to the first embodiment of the present invention.
Fig. 4 is a view illustrating a pressure capacity control motor in the hydraulic traveling drive system according to the first embodiment of the present invention.
Fig. 5 is a view illustrating a capacity control in the electric capacity control motor and the pressure capacity control motor in the hydraulic traveling drive system according to the first embodiment of the present invention.
Fig. 6 is a view illustrating a pump in a hydraulic traveling drive system according to a second embodiment of the present invention.
Fig. 7 is a view illustrating a hydraulic traveling motor (electric capacity control motor + pressure capacity control motor) in the hydraulic traveling drive system according to the second embodiment of the present invention.
Fig. 8 is a schematic configurational explanatory view illustrating a hydraulic traveling drive system according to a third embodiment of the present invention.
Fig. 9 is a configurational explanatory view illustrating a first electric capacity control motor in which a motor capacity becomes a minimum value if a control current sent from a controller is shut off according to the third embodiment of the present invention.
Fig. 10 is a view for explaining a relationship between a control current for controlling a capacity control electromagnetic proportional valve of the first electric capacity control motor and a motor capacity according to the third embodiment of the present invention.
Fig. 11 is a configurational explanatory view illustrating a second electric capacity control motor in which a motor capacity becomes a maximum value if the control current sent from the controller is shut off according to the third embodiment of the present invention.
Fig. 12 is a view for explaining a relationship between a control current for controlling a capacity control electromagnetic proportional valve of the second electric capacity control motor and a motor capacity according to the third embodiment of the present invention.

### DESCRIPTION OF THE PREFERRED EMBODIMENTS

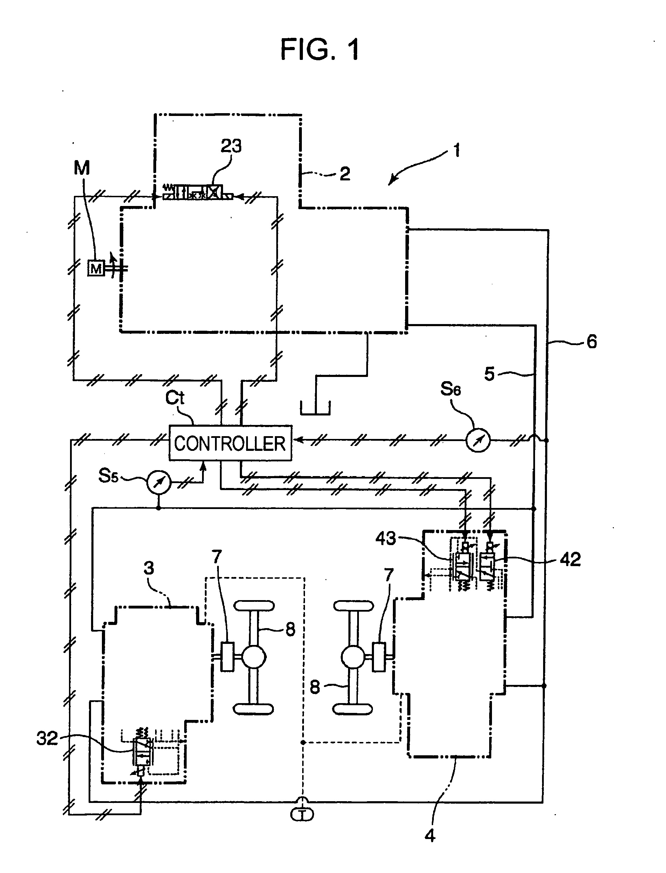

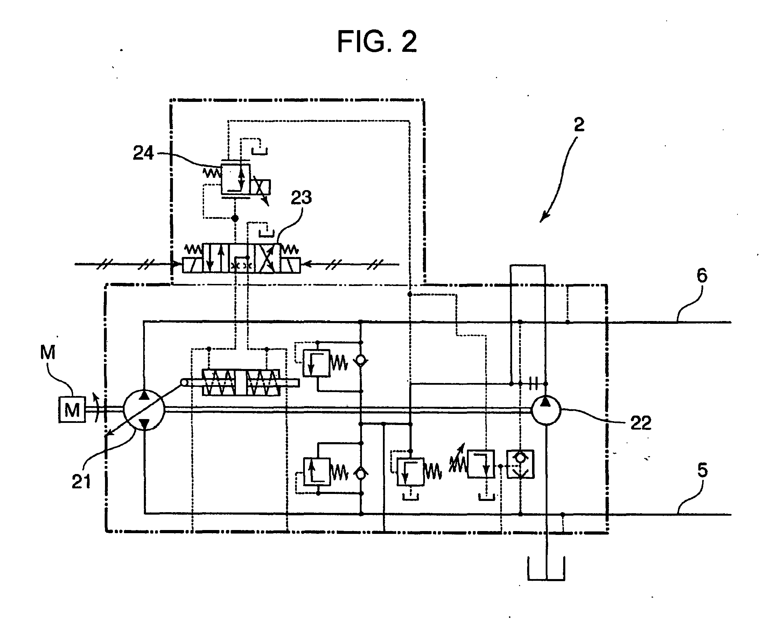

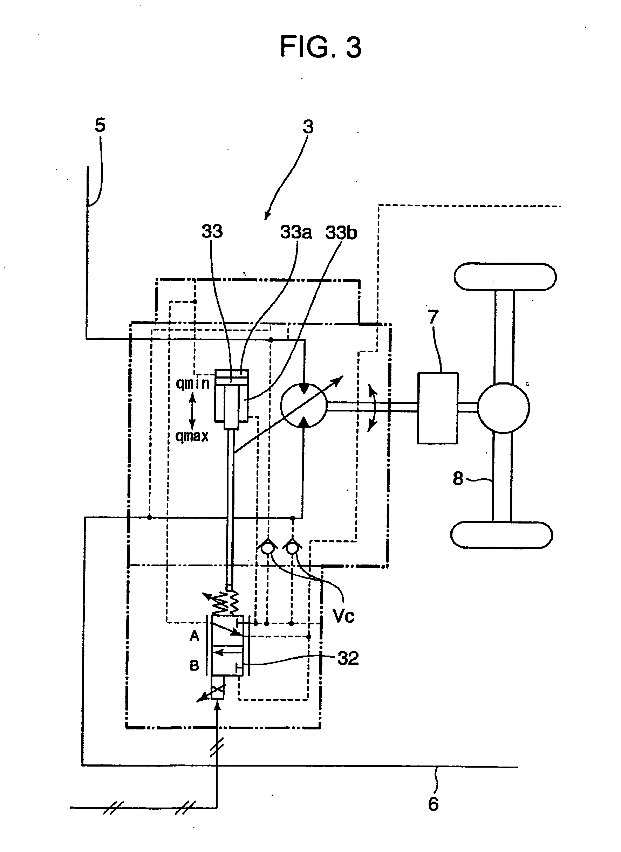

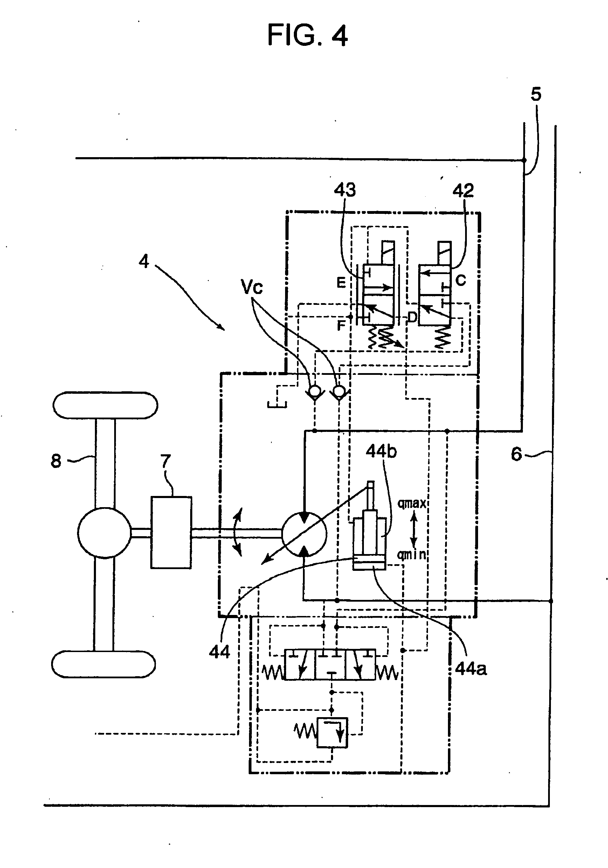

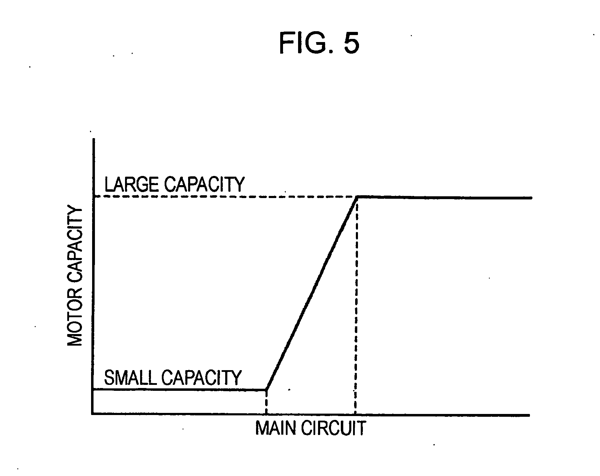

Hereinafter, a hydraulic traveling drive system according to the first embodiment of the present invention will be described with reference to the attached drawings. Fig. 1 is a view illustrating a schematic configuration of a hydraulic traveling drive system according to the first embodiment of the present invention. Fig. 2 is a view illustrating a pump in the hydraulic traveling drive system according to the first embodiment of the present invention. Fig. 3 is a view illustrating an electric capacity control motor in the hydraulic traveling drive system according to the first embodiment of the present invention. Fig. 4 is a view illustrating a pressure capacity control motor in the hydraulic traveling drive system according to the first embodiment of the present invention. Fig. 5 is a view illustrating a capacity control in the electric capacity control motor and the pressure capacity control motor in the hydraulic traveling drive system according to the first embodiment of the present invention.

Reference numeral 1 in Fig. 1 denotes a hydraulic traveling drive system (hydraulic circuit) according to the first embodiment of the present invention. The hydraulic traveling drive system 1 includes a pump 2, an electric capacity control motor 3, and a pressure capacity control motor 4 as main components. Each electromagnetic switching valve embedded in the hydraulic traveling drive system 1 is switch-controlled by a controller Ct.

The pump 2 includes, as shown in Fig. 2, a pair of main circuits which is connected to two ports, that is, a forward drive side main circuit 5 and a backward drive side main circuit 6. The electric capacity control motor 3 and the pressure capacity control motor 4 are reversibly driven by operating oil discharged from a variable displacement pump 21 and supplied from the forward drive side main circuit 5 and the backward drive side main circuit 6.

Together with the variable displacement pump 21, a charging pump 22 which prevents cavitation in the main circuits is driven by a motor M as prime mover. A four-port three-position electromagnetic switching valve 23 which is switched by a control current sent from the controller Ct is a forward-backward switching electromagnetic valve. A pump capacity control electromagnetic proportional valve 24 is disposed at an upstream side of the forward-backward switching electromagnetic valve 23 and the valve 24 performs a pump capacity control.

As shown in Fig. 3, driving torque of the electric capacity control motor 3 is transmitted to wheels which are provided at both ends of an axle 8 through a reducer 7, and a different gear of the axle 8. Driving torque of the pressure capacity control motor 4 is, as shown in Fig. 4, transmitted to wheels provided at both ends of the axle 8 through a reducer 7, and a different gear of the axle 8. Hereinafter, configurations of the electric capacity control motor 3 and the pressure capacity control motor 4 will be described in detail.

The electric capacity control motor 3 includes a three-port two-position capacity control electromagnetic proportional valve 32. The electromagnetic proportional valve 32 is switch-controlled by a control current sent from the controller Ct. The controller C receives detection signals from pressure sensors S5 and S6 which detect pressures of the operation oil of the respective forward drive side main circuit 5 and the backward drive side main circuit 6, which forms a closed circuit. The capacity control electromagnetic proportional valve 32 operates a large capacity side oil chamber 33a and a small capacity side oil chamber 33b to control an inclined piston 33. The inclined piston 33 controls a motor capacity of the electric capacity control motor 3.

More specifically, when a control current is supplied from the controller Ct to a solenoid of the capacity control electromagnetic proportional valve 32, the capacity control electromagnetic proportional valve 32 is switched from a position A to a position B. Then, one of pressures of operation oil of the forward drive side main circuit 5 and the backward drive side main circuit 6, a pressure having a higher pressure is supplied to the large capacity side oil chamber 33a through a check valve Vc. That is, into the small capacity side oil chamber 33b, the pressure of the high pressure side is always provided. On the other hand, into the large capacity side oil chamber 33a, using the pressure of the high pressure side as a primary pressure, the control pressure according to the instruction current sent from the controller Ct to the capacity control electromagnetic proportional valve 32 is supplied. Then, according to the control pressure, a position of the inclined piston 33 is determined and the capacity of the motor is controlled. On the other hand, if the control current sent from the controller Ct is shut off due to a trouble in breaking of wire, or the like, the operation oil in the large capacity side oil chamber 33a is discharged. Accordingly, the inclined piston 33 moves to have a minimum motor capacity. In Fig. 3, qmin denotes a minimum motor capacity, and qmax denotes a maximum motor capacity. Similarly, in Fig. 4, qmin denotes a minimum motor capacity, and qmax denotes a maximum motor capacity.

The pressure capacity control motor 4 includes a four-port two-position pressure selection valve 42. The four-port two-position pressure selection valve 42 is freely switched between a position C and a position D in response to an excitation by a control from the controller Ct or a non-excited state and selects one of the pressures of the forward drive side main circuit 5 and the backward drive side main circuit 6, which form the closed circuit. More specifically, the forward drive side main circuit 5 communicates with one port (port of lower side in Fig. 4) of two ports of an operation oil inflow side of the pressure selection valve 42 through the check valve Vc. The backward drive side main circuit 6 communicates with the other port (port of upper side in Fig. 4) of the two ports through the check valve Vc. That is, when the solenoid is excited by the controller Ct, the pressure selection switch 42 is switched to the position C, and the pressure of the backward drive side main circuit 6 is selected. When the state is changed to the non-excited state by the controller Ct, the pressure selection switch 42 is switched to the position D, and the pressure of the forward drive side main circuit 5 is selected. Then, the pressure selected by the pressure selection valve 42 is supplied to a capacity control valve 43.

A port of a secondary side of the pressure selection valve 42 communicates with a large capacity side oil chamber 44a between the large capacity side oil chamber 44a and a small capacity side oil chamber 44b through a position E of the capacity control valve 43. The large capacity side oil chamber 44a and the small capacity side oil chamber 44b operate an inclines piston 44. The inclined piston 44 controls a motor capacity of the pressure capacity control motor 4. The large capacity side oil chamber 44a communicates with a tank through a position F of the capacity control valve 43. Further, the port of the secondary side of the pressure selection valve 42 communicates with the capacity control valve 43 and the small capacity side oil chamber 44b which operates the inclined piston 44.

That is, when the solenoid is excited by an instruction issued by the controller Ct, the capacity control valve 43 is switched to the position E, operation oil supplied from the pressure selection valve 42 is supplied to the large capacity side oil chamber 44a. On the other hand, when the state is changed to the non-excited state, the capacity control valve 43 is switched to the position F, and the operation oil in the large capacity side oil chamber 44a is discharged to the tank. However, as will be well understood from Fig. 4, in the capacity control valve 43, even in the nonexicited state, a spool is operated by the pressure supplied from the pressure selection valve 42, and a pressure capacity control is performed with a balance between the large capacity side oil chamber 44a and the small capacity side oil chamber 44b. Accordingly, the motor capacity of the pressure capacity control motor 4 is set to be a capacity corresponding to the pressure supplied from the pressure selection valve 42.

Hereinafter, an operation of the hydraulic traveling drive system according to the first embodiment will be described. First, a case is assumed that when an HST vehicle (not shown) which is equipped with the hydraulic traveling drive system 1 moves forward, a solenoid of the forward-backward switching electromagnetic valve 23 of a regulator (the forward-backward switching electromagnetic valve 23 + the pump capacity control electromagnetic proportional valve 24) of the pump 2 is excited, operation oil is discharged from the pump 2 to the forward drive side main circuit 5, and a driving pressure is being increased. Further, as an example, a case is described that a motor capacity of the electric capacity control motor 3 is controlled by a pressure signal sent from the pressure sensor S5 provided in the forward drive side main circuit 5 as shown in Fig. 5, and a motor capacity of the pressure capacity control motor 4 is controlled by the capacity control valve 43 as shown in Fig. 5.

At a time of a start of traveling of the HST vehicle, if a failure such as a braking of wire occurs in a control circuit for controlling the capacity control electromagnetic proportional valve 32 of the electric capacity control motor 3, the capacity control electromagnetic proportional valve 32 stays at the position A, and the inclined piston 33 moves in a direction to reduce the motor capacity of the electric capacity control motor 3. Then, the motor capacity of the electric capacity control motor 3 is decreased to a minimum capacity.

Accordingly, even if the HST vehicle is operated to travel in the stopped state while the capacity control electromagnetic proportional valve 32 is held at the position A, the electric capacity control motor 3 cannot output an adequate driving torque. However, with respect to the motor capacity of the pressure capacity control motor 4, since the driving pressure of the forward drive side main circuit 5 is controlled by the capacity control valve 43 through the position D of the pressure selection valve 42, even if the failure such as the braking of wire occurs in the control circuit, the pressure capacity control motor 4 can output an adequate driving torque.

In the hydraulic traveling drive system 1 according to the first embodiment of the present invention, using the total driving force of the electric capacity control motor 3 and the pressure capacity control motor 4, the HST vehicle can travel.

In the case of the above Japanese Unexamined Patent Application Publication No. 2004-332753, the emergency evacuation is not possible. However, the hydraulic traveling drive system 1 is very advantageous in the emergency evacuation.

Further, when the HST vehicle travels at a high-speed, if the capacity control cannot work due to a sudden breaking of wire in the control circuit, as described above, the motor capacity of the electric capacity control motor 3 becomes a small capacity. Accordingly, it is prevented that the braking force causes a rapid deceleration. On the other hand, the pressure capacity control motor 4 has no relationship with the electric control and thus, the pressure capacity control motor 4 is maintained at a motor capacity corresponding to a pressure. Accordingly, the motor capacity of the pressure capacity control motor 4 is not rapidly changed. As described above, in the hydraulic traveling drive system 1 according to the first embodiment of the present invention, even if the sudden breaking of wire or the like occurs in the electric control circuit, the vehicle is not rapidly decelerated as in the case of Japanese Unexamined Patent Application Publication No. 2004-332753. Accordingly, very safety system can be provided.

Next, a case that the pressure capacity control motor 4 is used as an auxiliary brake in descending a long downhill slope will be described. Generally, to a large-sized vehicle which is heavy in weight, an auxiliary brake such as an exhaust brake which uses engine exhaust or a retarder is provided. In a case of the retarder, a brake force is generated by a propeller shaft. However, in a case of the HST vehicle, often the propeller shaft is not provided and then, it is not possible to provide the retarder. Accordingly, in the pressure capacity control motor 4 of the hydraulic traveling drive system 1 according to the first embodiment, as described above, it is provided the four-port two-position pressure selection valve 42 which is freely switched between the position C and the position D in response to an excitation by the control from the controller Ct or a non-excited state and selects one of the pressures of the forward drive side main circuit 5 and the backward drive side main circuit 6 which form the closed circuit. By the pressure selection valve 42, the function of the auxiliary brake can be obtained.

That is, when an accelerator pedal (not shown) is returned, if the pressure selection switch 42 of the pressure capacity control motor 4 is switched to the position C by the control from the controller Ct, a pressure (the pressure is set to be higher than that of the forward drive side main circuit 5 by the pump operation) of the backward drive side main circuit 6 is introduced into the capacity control valve 43 as a braking pressure. Accordingly, in the hydraulic traveling drive system 1 according to the first embodiment of the present invention, the motor capacity of the pressure capacity control motor 4 is increased and a large auxiliary braking force can be obtained. Further, as long as the electric control is normally performed, the pressure of the backward drive side main circuit 6 is introduced into the capacity control electromagnetic proportional valve 32. Then, the motor capacity of the electric capacity control motor 3 is also increased and further greater auxiliary braking force can be obtained. Accordingly, this is very advantageous in descending a long downhill slope.

On the other hand, if the vehicle travels on a flat road and it is not necessary to use the auxiliary brake (the pressure selection valve 4 is set at the position C), then, even if the accelerator pedal is returned, the pressure of the forward drive side main circuit 5 which is lower than the pressure of the backward drive side main circuit 6 is introduced from the pressure selection valve 42 to the capacity control valve 43.

Thus, the motor capacity of the pressure capacity control motor 4 is set to be a small capacity, and the braking force is set to be small. Accordingly, it is possible to perform an inertial travel in which the speed is slowly decreased and a burden in the accelerator pedal operation is reduced.

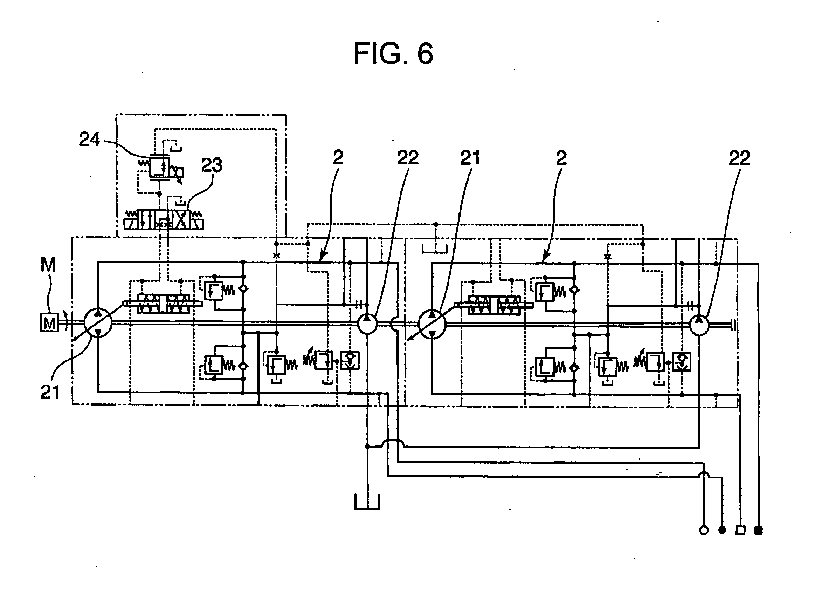

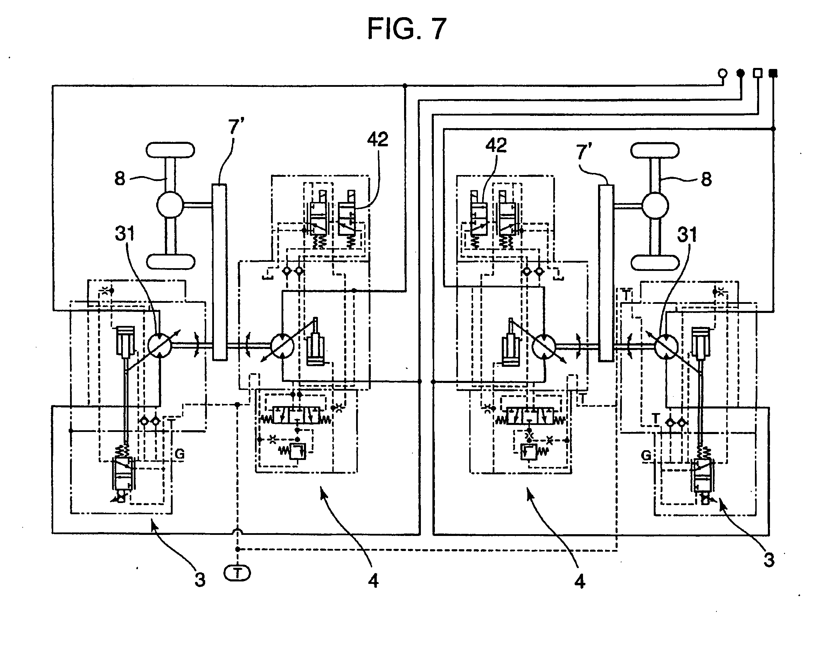

Now, a hydraulic traveling drive system according to the second embodiment of the present invention will be described with reference to the attached drawings. Fig. 6 is a view illustrating a pump in the hydraulic traveling drive system according to the second embodiment of the present invention. Fig. 7 is a view illustrating a hydraulic traveling motor (electric capacity control motor + pressure capacity control motor) in the hydraulic traveling drive system according to the second embodiment of the present invention. As will be well understood by a comparison of the relevant drawings, the main configuration of the hydraulic traveling drive system according to the second embodiment is similar to that of the first embodiment. Accordingly, the same reference numerals are given to the components corresponding to those in the first embodiment, and only points different from that of the first embodiment will be described. In Figs. 6 and 7, the control circuit which is controlled by the controller is omitted.

That is, the hydraulic traveling drive system according to the second embodiment of the present invention includes two pairs of the pumps 2, the electric capacity control motors 3, and the pressure capacity control motors 4 which respectively have similar configurations to those used in the hydraulic traveling drive system 1 according to the first embodiment. A driving torque of a pair of the electric capacity control motor 3 and the pressure capacity control motor 4 is transmitted to the single axle 8 through a transfer 7', and wheels which are provided at both ends of the axle 8 are driven. In the hydraulic traveling drive system according to the second embodiment of the present invention, a single forward-backward switching electromagnetic valve 23 is provided. By the single forward-backward switching electromagnetic valve 23, a discharge direction of operation oil of the two variable displacement pumps 21 can be switched.

In the hydraulic traveling drive system according to the second embodiment of the present invention, as described above, the axle 8 of the single axis is driven by the electric capacity control motor 3 and the pressure capacity control motor 4 which have the similar configurations to those used in the hydraulic traveling drive system 1 according to the first embodiment. Accordingly, the similar advantages to those of the hydraulic traveling drive system 1 of the first embodiment can be obtained. Further, in the hydraulic traveling drive system according to the second embodiment of the present invention, the pressure at the brake side can be selected using one or both of the two pairs of the pressure selection valves 42 of the pressure capacity control motors 4. Accordingly, it is possible to increase both of the braking force of the axle 8 of the single axis and the braking force of the axle 8 of the two axes. Thus, it is possible to have a beneficial advantage that the auxiliary braking force can be varied according to the degree of the inclination of the long downhill slope.

Now, a hydraulic traveling drive system according to the third embodiment of the present invention will be described with reference to the attached drawings.

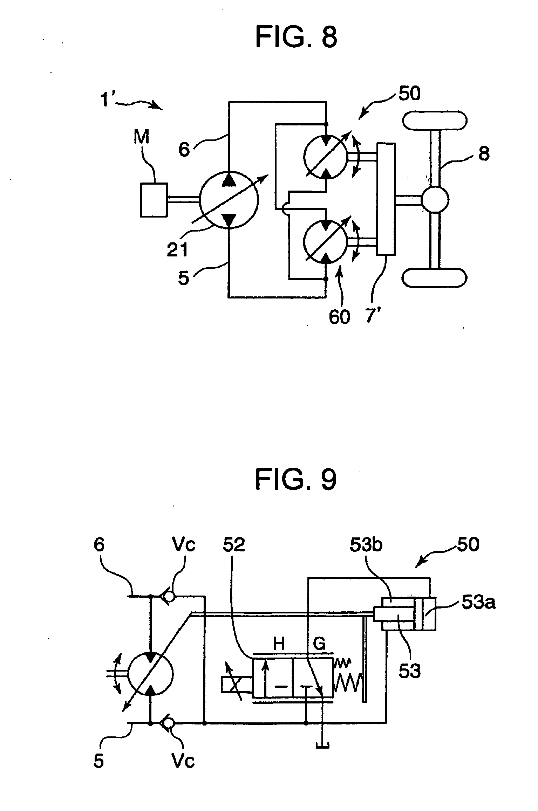

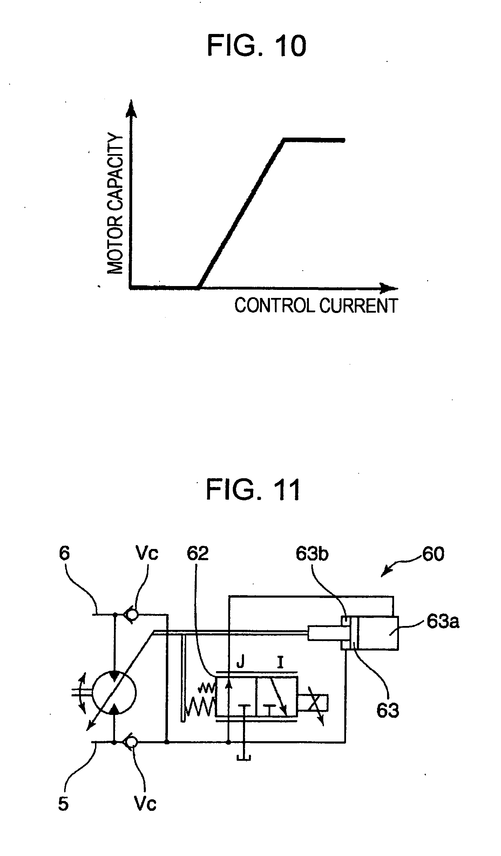

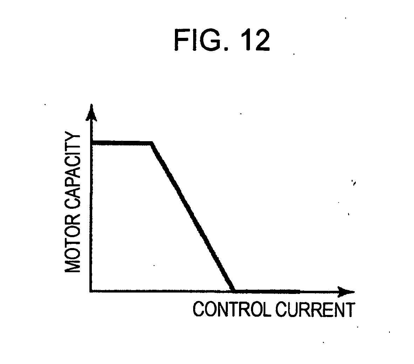

Fig. 8 is a schematic configurational explanatory view illustrating a hydraulic traveling drive system according to the third embodiment of the present invention. Fig. 9 is a configurational explanatory view illustrating a first electric capacity control motor in which a motor capacity becomes a minimum value if a control current sent from a controller is shut off. Fig. 10 is a view for explaining a relationship between a control current for controlling a capacity control electromagnetic proportional valve of the first electric capacity control motor and a motor capacity. Fig. 11 is a configurational explanatory view illustrating a second electric capacity control motor in which a motor capacity becomes a maximum value if the control current from the controller is shut off. Fig. 12 is a view for explaining a relationship between a control current for controlling a capacity control electromagnetic proportional valve of the second electric capacity control motor and a motor capacity.

Reference numeral 1' shown in Fig. 8 denotes the hydraulic traveling drive system (hydraulic circuit) according to the third embodiment of the present invention. The hydraulic traveling drive system 1' includes the variable displacement pump 21 which is driven by the prime mover M and a main circuit which has the forward drive side main circuit 5 and the backward drive side main circuit 6 which are connected to two ports of the variable displacement pump 21 and form a closed circuit. By operation oil discharged from the variable displacement pump 21 through the main circuit, a first electric capacity control motor 50 and a second electric capacity control motor 60 are driven. The first electric capacity control motor 50 and the second electric capacity control motor 60 drive wheels provided at distal ends of the axle 8 through the transfer 7'.

As show in Fig. 9, the first electric capacity control motor 50 includes a capacity control electromagnetic proportional valve 52 which is controlled by a control current sent from a controller (not shown). A motor capacity of the first electric capacity control motor 50 is controlled by supplying pressure oil to or discharging the pressure oil from a large capacity side oil chamber 53a and a small capacity side oil chamber 53b of an inclined piston 53 by the capacity control electromagnetic proportional valve 52.

More specifically, the capacity control electromagnetic proportional valve 52 is switched from a position G to a position H if the control current is supplied from the controller to the solenoid, and between the forward drive side main circuit 5 and the backward drive side main circuit 6, a pressure having a higher pressure is to be a primary pressure, and at a secondary pressure corresponding to the control current, the pressure is supplied to the large capacity side oil chamber 53a. That is, into the small capacity side oil chamber 53b, the pressure of the high pressure side is always provided. On the other hand, into the large capacity side oil chamber 53a, the pressure of the high pressure side is supplied. Accordingly, as shown in Fig. 10, the inclined piston 53 controls the motor capacity of the electric capacity control motor 50 in a direction to be a motor capacity corresponding to the control current. On the other hand, if the control current is shut off due to a trouble such as breaking of wire, the pressure oil in the large capacity side oil chamber 53a is discharged.

The second electric capacity control motor 60 includes a capacity control electromagnetic proportional valve 62 which is controlled by a control current sent from the controller (not shown). A motor capacity of the second electric capacity control motor 60 is controlled by supplying pressure oil to or discharging the pressure oil from a large capacity side oil chamber 63a and a small capacity side oil chamber 63b of an inclined piston 63 by the capacity control electromagnetic proportional valve 62.

More specifically, between the forward drive side main circuit 5 and the backward drive side main circuit 6 selected by the check valve Vc, a pressure having a higher pressure is always supplied to the small capacity side oil chamber 63b of the inclined piston 63. If the control current sent from the controller is shut off, the capacity control electromagnetic proportional valve 62 is positioned at a position J, and the pressure of the high pressure side is also supplied into the large capacity side oil chamber 63a. Accordingly, the inclined piston 63 moves in a leftward direction in Fig. 11, and as shown in Fig. 12, the motor capacity of the second electric capacity control motor 60 becomes a maximum value.

On the other hand, if a control current is supplied form the controller, the capacity control electromagnetic proportional valve 62 supplies the secondary pressure corresponding to the current into the large capacity side oil chamber 63a. Then, the inclined piston 63 moves in the leftward direction in Fig. 11 according to the control current. As the control current is increased to a high current, as shown in Fig. 12, the motor capacity of the second electric capacity control motor 60 is decreased, and finally, the motor capacity is decreased to a minimum value.

Further, in order to enable the vehicle to safely travel on a long slope using an auxiliary braking force in states according to a degree of an inclination of the downhill slope, an auxiliary braking force switching function is added to the controller. In the auxiliary braking force switching function, one of or both of the capacity control electromagnetic proportional valve 52 of the first electric capacity control motor 50 and the capacity control electromagnetic proportional valve 62 of the second electric capacity control motor 60 are controlled such that the motor capacity is to be a large capacity, and the auxiliary braking force can be obtained in stages.

Hereinafter, an operation of the hydraulic traveling drive system 1' according to the third embodiment will be described. If the control current sent from the controller is shut off, the motor capacity of the first electric capacity control motor 50 becomes the minimum value, and on the other hand, the motor capacity of the second electric capacity control motor 60 becomes the maximum value. Further, in traveling on the long slope, one of or both of the capacity control electromagnetic proportional valve 52 of the first electric capacity control motor 50 and the capacity control electromagnetic proportional valve 62 of the second electric capacity control motor 60 are controlled such that the motor capacity are controlled, and the auxiliary braking force can be obtained in stages. Thus, according to the hydraulic traveling drive system 1' according to the third embodiment of the present invention, similar advantages to those of the above first embodiment can be obtained. In the hydraulic traveling drive system 1' according to the third embodiment of the present invention, as described above, the axle of the one axis is driven by the first electric capacity control motor 50 and the second electric capacity control motor 60. However, similarly to the case of the first embodiment, in the third embodiment, it is possible that the individual motors drive the individual axles.

## Claims

1. A hydraulic traveling drive system comprising:
a motor as a prime mover (M);
a variable displacement pump (21) which is driven by the prime mover (M); and
a closed circuit which includes two variable displacement motors (3, 4) provided in parallel, the motors (3, 4) are driven by operation oil discharged from the variable displacement pump (21), and which have inclined pistons (33, 44) for controlling motor capacities, wherein one of the two variable displacement motors (3, 4) is a pressure capacity control motor (4) which includes a capacity control valve (43) which controls the inclined piston (44) in a direction that the motor capacity becomes a motor capacity corresponding to pressures in one of a pair of main circuits (5, 6) in response to a shut-off of a control current supplied from a controller (Ct) by operating a spool of the capacity control valve (43) by a pressure supplied from one of the pairs of main circuits (5, 6), **characterized in that**
the other variable displacement motor is an electric capacity control motor (3) which includes a capacity control electromagnetic proportional valve (32) which controls the inclined piston (33) in a direction that the motor capacity becomes a minimum value in response to a shut-off of a control current supplied from a controller (Ct) which receives detection signals sent from pressure sensors (S5, S6) which detect respective pressures in a pair of main circuits in the closed circuit.

2. The hydraulic traveling drive system according to Claim 1, wherein into the capacity control valve (43) of the pressure capacity control motor (4), a pressure selected by a pressure selection valve (42) which is switched by a control current supplied from the controller (Ct), and selects one of pressures in the pair of the main circuits (5, 6) is introduced.

3. The hydraulic traveling drive system according to Claim 1 or Claim 2, wherein an axle (8) of a single axis is driven by the electric capacity control motor (3) and the pressure capacity control motor (4).

4. A hydraulic traveling drive system comprising:
a motor as a prime mover (M);
a variable displacement pump (21) which is driven by the prime mover (M); and
a closed circuit which includes two variable displacement motors (50, 60) provided in parallel, the motors are driven by operation oil discharged from the variable displacement pump (21), and which have inclined pistons (53, 63) for controlling motor capacities, **characterized in that**
one of the two variable displacement motors (50, 60) is a first electric capacity control motor (50) which includes a capacity control electromagnetic proportional valve (52) which has a function to control the inclined piston (53) in a direction that the motor capacity becomes a minimum value if a control current supplied from a controller (Ct) is shut off, and
the other variable displacement motor is a second electric capacity control motor (60) which includes a capacity control electromagnetic proportional valve (62) which has a function to control the inclined piston (63) in a direction that the motor capacity becomes a maximum value if the control current supplied from the controller (Ct) is shut off.

5. The hydraulic traveling drive system according to Claim 4, wherein the controller (Ct) further includes an auxiliary braking force switching function that one of or both of the capacity control electromagnetic proportional valve (52) of the first electric capacity control motor (50) and the capacity control electromagnetic proportional valve (62) of the second electric capacity control motor (60) is controlled such that the motor capacity becomes a large capacity to obtain an auxiliary braking force in stages.

6. The hydraulic traveling drive system according to Claim 4 or Claim 5, wherein an axle (8) of a single axis is driven by the first electric capacity control motor (50) and the second electric capacity control motor (60).

## Patentansprüche

1. Hydraulisches Fahrantriebssystem mit:
einem Motor als einem Hauptantriebsaggregat (M);
einer Pumpe (21) mit variablem Fördervolumen, die durch das Hauptantriebsaggregat (M) angetrieben ist; und
einem geschlossenen Kreislauf, welcher zwei Motoren (3, 4) mit variablem Schluckvolumen aufweist, die parallel vorgesehen sind, wobei die Motoren (3, 4) durch von der Pumpe (21) mit variablem Fördervolumen abgegebenes Arbeitsöl angetrieben sind, und welche schräggestellte Kolben (33, 44) zum Steuern der Motorkapazitäten haben, wobei einer der zwei Motoren (3, 4) mit variablem Schluckvolumen ein Druckkapazitätssteuermotor (4) ist, der ein Kapazitätssteuerventil (43) hat, welches den schräggestellten Kolben (44) in einer Richtung steuert, in der die Motorkapazität zu einer Motorkapazität wird, die Drücken in einem von einem Paar Hauptkreisen (5, 6) entspricht, und zwar in Antwort auf eine Unterbrechung eines von einer Steuereinrichtung (Ct) zugeführten Steuerstroms, indem ein Kolben des Kapazitätssteuerventils (43) durch einen von einem des Paars Hauptkreisen (5, 6) zugeführten Druck betätigt wird, **dadurch gekennzeichnet, dass**
der andere Motor mit variablem Schluckvolumen ein Elektrokapazitätssteuermotor (3) ist, der ein elektromagnetisches Kapazitätssteuerproportionalventil (32) aufweist, welches den schräggestellten Kolben (33) in einer Richtung steuert, in der die Motorkapazität zu einem minimalen Wert wird, in Antwort auf eine Unterbrechung eines von einer Steuereinrichtung (Ct) zugeführten Steuerstroms, welche von Drucksensoren (S5, S6) geschickte Erfassungssignale empfängt, die jeweilige Drücke in einem Paar von Hauptkreisen in dem geschlossenen Kreis erfassen.

2. Hydraulisches Fahrantriebssystem gemäß Anspruch 1, wobei in das Kapazitätssteuerventil (43) des Druckkapazitätssteuermotors (4) ein Druck eingebracht wird, der durch ein Druckauswahlventil (42) ausgewählt wird, welches durch einen von der Steuereinrichtung (Ct) zugeführten Steuerstrom geschaltet wird, und einen der Drücke in dem Paar Hauptkreise (5, 6) auswählt.

3. Hydraulisches Fahrantriebssystem gemäß Anspruch 1 oder Anspruch 2, wobei eine Achswelle (8) mit einer einzigen Achse durch den Elektrokapazitätssteuermotor (3) und den Druckkapazitätssteuermotor (4) angetrieben ist.

4. Hydraulisches Fahrantriebssystem mit:
einem Motor als ein Hauptantriebsaggregat (M);
einer Pumpe (21) mit variablem Fördervolumen, welche durch das Hauptantriebsaggregat (M) angetrieben ist; und
einem geschlossenen Kreislauf, welcher zwei Motoren (50, 60) mit variablem Schluckvolumen aufweist, die parallel vorgesehen sind, wobei die Motoren durch von der Pumpe (21) mit variablem Fördervolumen abgegebenes Arbeitsöl angetrieben sind, und welche schräggestellte Kolben (53, 63) zum Steuern der Motorkapazitäten haben, **dadurch gekennzeichnet, dass**
einer der beiden Motoren (50, 60) mit variablem Schluckvolumen ein erster Elektrokapazitätssteuermotor (50) ist, der ein elektromagnetisches Kapazitätssteuerproportionalventil (52) aufweist, welches eine Funktion zum Steuern des schräggestellten Kolbens (53) in einer Richtung hat, in der die Motorkapazität zu einem Minimalwert wird, falls ein von einer Steuereinrichtung (Ct) zugeführter Steuerstrom unterbrochen ist, und
der andere Motor mit variablem Schluckvolumen ein zweiter Elektrokapazitätssteuermotor (60) ist, der ein elektromagnetisches Kapazitätssteuerproportionalventil (62) aufweist, welches eine Funktion zum Steuern des schräggestellten Kolbens (63) in einer Richtung hat, in der die Motorkapazität zu einem Maximalwert wird, falls der von der Steuereinrichtung (Ct) zugeführte Steuerstrom unterbrochen ist.

5. Hydraulisches Fahrantriebssystem gemäß Anspruch 4, wobei die Steuereinrichtung (Ct) ferner eine Hilfsbremskraftschaltfunktion aufweist, gemäß der eines oder beide von dem elektromagnetischen Kapazitätssteuerproportionalventil (52) des ersten Elektrokapazitätssteuermotors (50) und dem elektromagnetischen Kapazitätssteuerproportionalventil (62) des zweiten Elektrokapazitätssteuermotors (60) so gesteuert wird, dass die Motorkapazität zu einer großen Kapazität wird, um eine stufenweise Hilfsbremskraft zu erhalten.

6. Hydraulisches Fahrantriebssystem gemäß Anspruch 4 oder Anspruch 5, wobei eine Achswelle (8) mit einer einzigen Achse durch den ersten Elektrokapazitätssteuermotor (50) und den zweiten Elektrokapazitätssteuermotor (60) angetrieben ist.

## Revendications

1. Système d'entraînement hydraulique comprenant :
un moteur en tant que moteur primaire (M) ;
une pompe (21) à cylindrée variable qui est entraînée par le moteur primaire (M) ; et
un circuit fermé qui comprend deux moteurs (3, 4) à cylindrée variable prévus en parallèle, les moteurs (3, 4) sont entraînés par de l'huile de fonctionnement déchargée de la pompe (21) à cylindrée variable, et qui ont des pistons inclinés (33, 44) pour commander les capacités moteurs, où l'un des deux moteurs (3, 4) à cylindrée variable est un moteur (4) de commande de capacité de pression qui comprend une soupape (43) de commande de capacité qui commande le piston (44) incliné dans une direction où la capacité du moteur devient une capacité du moteur correspondant à des pressions dans l'un d'une paire de circuits (5, 6) principaux en réponse à une coupure d'un courant de commande fourni par un dispositif de commande (Ct) en actionnant un tiroir cylindrique de la soupape (43) de commande de capacité par une pression fournie par l'une des paires de circuits (5, 6) principaux, **caractérisé en ce que**
l'autre moteur à cylindrée variable est un moteur (3) de commande de capacité qui comprend une soupape (32) proportionnelle électromagnétique de commande de capacité qui commande le piston (33) incliné danse direction où la capacité du moteur devient égale à une valeur minimale en réponse à une coupure d'un courant de commande fourni par un dispositif de commande (Ct) qui reçoit des signaux de détection envoyés par des capteurs (S5, S6) de pression qui détectent des pressions respectives dans une paire de circuits principaux dans le circuit fermé.

2. Système d'entraînement hydraulique selon la revendication 1, où dans la soupape (43) de commande de capacité du moteur (4) de commande de capacité de pression, on introduit une pression sélectionnée par une soupape (42) de sélection de pression qui est commutée par un courant de commande fourni par le dispositif de commande (Ct), et qui sélectionne l'une parmi des pressions dans la paire de circuits principaux (5, 6).

3. Système d'entraînement hydraulique selon la revendication 1 ou la revendication 2, où un essieu (8) d'un seul axe est entraîné par le moteur (3) de commande de capacité électrique et le moteur (4) de commande de capacité de pression.

4. Système d'entraînement hydraulique comprenant :
un moteur en tant que moteur primaire (M) ;
une pompe (21) à cylindrée variable qui est entraînée par le moteur primaire (M) ; et
un circuit fermé qui comprend deux moteurs (50, 600) à cylindrée variable prévus en parallèle, les moteurs sont entraînés par de l'huile de fonctionnement déchargée de la pompe (21) à cylindrée variable, et qui ont des pistons inclinés (53, 63) pour commander les capacités des moteurs, **caractérisé en ce que**
l'un des deux moteurs (50, 60) à cylindrée variable est un premier moteur (50) de commande de capacité électrique qui comprend une soupape (52) proportionnelle électromagnétique de commande de capacité qui a une fonction consistant à commander le piston (53) incliné dans une direction où la capacité du moteur devient égale à une valeur minimale si un courant de commande fourni par un dispositif de commande (Ct) est coupé, et
l'autre moteur à cylindrée variable est un deuxième moteur (60) de commande de capacité électrique qui comprend une soupape (62) proportionnelle électromagnétique de commande de capacité qui a une fonction consistant à commander le piston (63) incliné dans une direction où la capacité du moteur devient égale à une valeur maximale si le courant de commande fourni par le dispositif de commande (Ct) est coupé.

5. Système d'entraînement hydraulique selon la revendication 4, où le dispositif de commande (Ct) comprend en outre une fonction de commutation de force de freinage auxiliaire où l'une ou les deux de la soupape (52) proportionnelle électromagnétique de commande de capacité du premier moteur (50) de commande de capacité électrique et de la soupape (62) proportionnelle électromagnétique de commande de capacité du deuxième moteur (60) de commande de capacité électrique soit commandée de telle sorte que la capacité du moteur devient égale à une capacité haute pour obtenir une force de freinage auxiliaire par paliers.

6. Système d'entraînement hydraulique selon la revendication 4 ou la revendication 5, où un essieu (8) d'un seul axe est entraîné par le premier moteur (50) de commande de capacité électrique et le deuxième moteur (60) de commande de capacité électrique.
